# FASCICULE DE BREVET EUROPEEN

(11) **EP 3 316 234 B1**
(45) Date de publication et mention de la délivrance du brevet: **21.09.2022**
(21) Numéro de dépôt: 16196518.1
(22) Date de dépôt: 31.10.2016
(51) Int. Cl.: G08G 1/14, E01F 13/04, G06Q 10/02

(54) **PROCÉDÉ DE GESTION DE PLACE DE STATIONNEMENT**
PARKPLATZ-VERWALTUNGSVERFAHREN
METHOD FOR MANAGING A PARKING SPACE

(43) Date de publication de la demande: 02.05.2018
(73) Titulaire: Elite Swiss Business Solutions SA, 1170 Aubonne (CH)
(72) Inventeur: Pugliese, François, 1806 St. Légier (CH)
(74) Mandataire: KATZAROV S.A.

(56) Documents cités:
- EP-A1- 2 648 171
- CN-A- 104 952 245
- CN-A- 105 913 504
- US-A1- 2004 236 615
- US-A1- 2008 263 147
- US-A1- 2009 070 156

## Description

### DOMAINE TECHNIQUE DE L'INVENTION

La présente invention se rapporte à un procédé de gestion de place de stationnement. Elle concerne, plus particulièrement un procédé de mise à disposition d'une place de stationnement pré-réservée.

### ETAT DE LA TECHNIQUE

US 2004/236615 A1 divulgue un procédé de réservation de places de stationnement payantes gérées par au moins une borne de type parcmètre comportant pour chaque place gérée des moyens d'indication de l'état des paiements définissant le statut autorisé ou non du stationnement et des moyens de blocage régulant l'accès à chaque place.

Il est de plus en plus rappelé aujourd'hui que nous sommes en train de vivre une troisième ou quatrième révolution industrielle, selon le point de vue. De manière générale, la définition d'une révolution industrielle rappelle qu'elle nécessite de nouvelles sources d'énergie, de nouveaux moyens de communication, intellectuels et physiques et un nouveau type d'économie créé sur la base de ces deux caractéristiques.

De nos jours, on identifie très bien les nouvelles énergies que l'on appelle énergies propres, le solaire, l'éolien, etc. On identifie également les nouveaux moyens de communication, notamment le web, basé sur l'internet qui permet l'échange mondial de pensées via les blogs ou les réseaux sociaux, par exemple, et l'échange de produits via des sites de vente ou d'échange de bien tels qu'Amazon ou du même genre.

De manière générale, ces innovations ont permis de créé un nouveau type d'économie que l'on appelle l'économie participative ou collaborative. Ce type d'économie est basée sur la mise en relation de particuliers qui échangent des biens ou des services via une plateforme web ou mobile. Les pionniers dans ce domaine ont agi dans le domaine du logement et du service de transport de passager en voiture par des particuliers. Ce nouveau type d'économie est appelé à se diversifier dans plusieurs domaines jusqu'à devenir le nouveau standard économique dans tous les domaines.

Parallèlement à cela, on observe une densification des populations en milieu urbain ainsi qu'une forte augmentation des moyens de transports privés. Ces deux facteurs résultent en un étalement et un agrandissement des zones urbaines de sorte que les personnes vivent en périphérie des centres villes et se rendent au travail en véhicule privé. Evidemment, une fois arrivé à destination le véhicule privé nécessite d'être stationné pour la journée ce qui n'est pas toujours aisé étant donné la densification de ces zones.

Inversement, il existe des places de stationnement privées non utilisées en journée, par exemple, car laissée libre par leur propriétaire. Il a donc été pensé, sur la base de l'économie participative décrite plus haut, de mettre en relation la personne ayant besoin d'une place de stationnement appelée le locataire avec une personne disposant d'une telle place et n'en ayant pas l'utilité appelée le loueur.

De tels systèmes et procédés ont donc été créés tels que prendsmaplace.fr en France ou encore ParkU. Ces sites ou applications mobiles mettent en relation une personne ayant besoin d'une place de parking, que l'on appellera le locataire, avec une personne mettant sa place de stationnement à disposition, que l'on appellera le loueur, via une plateforme web ou du même genre.

Ce type de système rencontre néanmoins beaucoup de problèmes car s'il met les parties en contact, et leur permet de s'accorder entre elles sur les horaires et les tarifs de la location de la place de stationnement, il ne gère pas absolument pas les éléments perturbateurs extérieurs tels que les places de stationnement occupées illégitimement, les dépassements d'heures, etc.

Il a donc été nécessaire de développer un système et un procédé de gestion de place de stationnement qui n'est pas soumis à ces problèmes.

Un objet de la présente invention est donc de résoudre les problèmes décrits ci-dessus, et plus particulièrement de fournir un système et un procédé de gestion de place de stationnement fiable permettant au loueur de surveiller son occupation et au locataire de gérer lui-même son temps d'occupation.

### OBJET DE L'INVENTION

A cet effet, un premier aspect de la présente invention se rapporte à un procédé de gestion d'au moins une place de stationnement selon la revendication 1.

Avantageusement, le procédé comprend en outre une étape de détermination de la vacance de la au moins une place de stationnement pour la période de temps désirée, postérieure à l'étape de transmission d'un message de réservation de sorte que l'étape de pairage n'est exécutée que si la vacance est avérée pour la période de temps. Ainsi, le système gère l'attribution des places vacantes automatiquement selon une priorité chronologique pour empêcher les doublons.

Selon un mode de réalisation préféré, le procédé comprend en outre une étape de proposition alternative automatique consistant à proposer une place de stationnement alternative si la au moins une place de stationnement pour la période de temps désirée n'est pas vacante. Ce mode de réalisation permet donc une analyse proactive et intelligente pour maximiser le taux d'occupation des places de stationnement disponibles en fonction de lieu désiré.

De manière avantageuse, l'étape de pairage comprend d'activer un élément de commande de libération sur le dispositif de communication mobile et en ce qu'une sélection de l'élément de commande de libération déclenche l'étape de transmission d'une commande de libération de la place de stationnement. De cette manière, l'activation de libération est une commande intuitive facile à utiliser.

Selon un mode de réalisation préféré, l'élément de commande de libération sur ledit dispositif de communication mobile est une icône sur un écran tactile. Ainsi, le procédé peut être mis en œuvre facilement avec les nouvelles technologies.

De manière avantageuse, le procédé comprend en outre une étape de recherche de place de stationnement ou d'un groupe de places de stationnement au plus proche de l'adresse donnée antérieure à l'étape de détermination de la vacance de la place stationnement. De cette manière, il optimise la recherche de place libre.

De préférence, l'étape de déplacement du dispositif de blocage de place pour libérer la place de stationnement déclenche un minutage du temps jusqu'à l'échéance de la réservation. Ainsi, il est possible de surveiller le temps d'occupation de la place de stationnement.

Selon un mode de réalisation préféré, le procédé comprend une étape d'alerte comprenant l'envoi d'une notification au dispositif de communication mobile après un minutage prédéterminé. Ce mode de réalisation permet donc au locataire d'être averti de l'avancement de sa location.

De manière avantageuse, la notification est une proposition de prolongement si aucune réservation n'est en attente à l'échéance. De cette manière, le locataire est informé de la possibilité de prolonger sa location.

De préférence, la notification est une alerte si une autre réservation est en attente à l'échéance. De cette manière, le locataire est informé de la nécessité de déplacer son véhicule.

Selon un mode de réalisation préféré, à l'échéance de la réservation le procédé met en œuvre une étape de détermination d'occupation de place pour déterminer si la place a été libérée. Ce mode de réalisation permet donc de vérifier l'état de la place de stationnement.

De manière avantageuse, si la place est libérée à l'échéance, le dispositif de blocage de place est déplacé pour bloquer à nouveau la place de stationnement. Ainsi, on empêche l'utilisation sauvage de la place à nouveau automatiquement.

Avantageusement, le dispositif de blocage de place de stationnement est un arceau de sécurité à énergie solaire. De cette manière, il ne requiert pas d'alimentation particulière.

De manière avantageuse, le dispositif de communication mobile est un smartphone. Ainsi, le locataire peut facilement accéder à ce procédé.

Selon un mode de réalisation préféré, le procédé peut optionnellement mettre en oeuvre une étape de navigation pour guider le locataire à sa place de stationnement une fois la réservation effectuée. Ainsi, le locataire peut facilement trouver son chemin jusqu'à sa place et ainsi utiliser le procédé même dans une ville qu'il ne connait pas.

Selon un deuxième aspect, la présente invention vise un programme informatique agencé pour être installé sur un dispositif de communication mobile adapté pour mettre en œuvre le procédé selon le premier aspect de l'invention. Les buts, avantages et caractéristiques particulières du programme informatique de la présente invention étant similaires à ceux du procédé objet de la présente invention, ils ne sont pas rappelés ici.

### BREVE DESCRIPTION DES FIGURES

D'autres avantages, buts et caractéristiques particulières de l'invention ressortiront de la description non limitative qui suit d'au moins un mode de réalisation particulier du dispositif et du procédé objets de la présente invention, en regard des dessins annexés, dans lesquels :

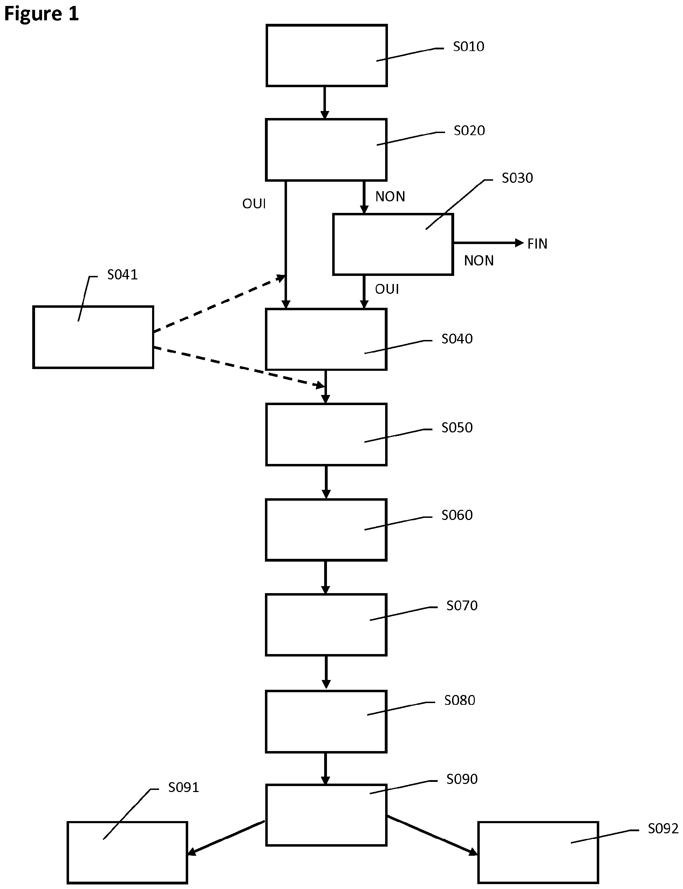

- la figure 1 représente, schématiquement, un organigramme représentant le procédé selon un mode de réalisation préféré de la présente invention.

### DESCRIPTION D'EXEMPLES DE REALISATION DE L'INVENTION

La présente description est donnée à titre non limitatif, chaque caractéristique d'un mode de réalisation pouvant être combinée à toute autre caractéristique de tout autre mode de réalisation de manière avantageuse.

On observe, sur la figure 1, une vue schématique d'un mode de réalisation particulier du procédé de la présente invention.

Le procédé de la présente invention illustré en figure 1 est un procédé de gestion d'au moins une place de stationnement, comprenant dans un premier temps une étape de transmission S010 d'un message de réservation depuis un dispositif de communication mobile d'un locataire, par exemple smartphone, via une application mobile mettant en œuvre ce procédé à un serveur central géré par un bailleur qui met en relation des locataires avec des loueurs pour au moins une place de stationnement pour une période de temps prédéterminée. Le message de réservation peut être de d'importe quel type et indiquer divers paramètres tels que l'adresse désirée, le temps désiré, le tarif désiré, la récurrence de la location ou du même genre.

A partir de ces informations, le bailleur va rechercher une place de stationnement au plus proche de l'adresse donnée ou alternativement un groupe de places proches de l'adresse donnée sur lequel il va ensuite exécuté optionnellement l'étape ci-dessous de détermination S020 de vacance.

En effet, une fois le message de réservation reçu par le serveur du bailleur, le procédé met en œuvre optionnellement une étape de détermination S020 de la vacance de la place de stationnement désirée pour la période de temps désirée sur la place ou le groupe de places élu pour une adresse donnée. Cette étape est évidemment postérieure à l'étape de transmission d'un message de réservation S010.

A ce moment-là, si la place est vacante pour la période de temps souhaitée, la transaction est établie et une étape de pairage S040 du dispositif de communication mobile avec un dispositif de blocage de place de stationnement est mise en œuvre. Le dispositif de blocage de place de stationnement est de préférence un arceau de sécurité alimenté par énergie solaire, c'est à dire énergétiquement autonome et disposant de cellules photovoltaïques.

Alternativement, si la place est occupée pour au moins une partie de la période souhaitée, le procédé passe à une étape de proposition alternative S030 automatique consistant à proposer une place de stationnement alternative au locataire qui peut accepter (OUI) la proposition ou refuser (NON). S'il refuse le procédé s'arrête s'il accepte, le procédé passe à l'étape suivante S040 de pairage avec l'élément de blocage de la nouvelle place de stationnement choisie.

L'étape de pairage S040 comprend de mettre en relation le dispositif de communication mobile du locataire avec le dispositif de blocage de la place de stationnement, c'est-à-dire d'activer un élément de commande de libération sur le dispositif de communication mobile, tel qu'une icône sur un écran tactile, et dont la sélection, en appuyant sur l'icône par exemple, déclenche l'étape de transmission S050 d'une commande de libération de la place de stationnement depuis le dispositif de communication mobile au dispositif de blocage de place de sorte à le déplacer pour libérer la place, et une étape de déplacement S060 du dispositif de blocage de place pour libérer la place de stationnement est mise en œuvre, c'est-à-dire que l'arceau de sécurité est abaissé.

Si l'étape de pairage S040 peut être automatique, le procédé peut également comprendre une sécurité qui consiste en une étape de détection S041 d'une distance prédéterminée entre le dispositif de communication mobile, et donc selon toute vraisemblance le locataire, et la place de stationnement réservée qui est antérieure à l'étape de pairage S040 et ne permettant le pairage qu'en cas de détection d'une distance égale ou inférieure à la distance prédéterminée. Ainsi on évite d'accidentellement libérer la place à distance avant que le locataire ne soit prêt à l'occuper.

Par la suite, une fois que l'étape de déplacement S060 du dispositif de blocage de place pour libérer la place de stationnement a été exécutée, c'est-à-dire une fois que l'arceau de protection est abaissé pour laisser le véhicule du locataire se garer, on déclenche une étape de minutage S070 du temps jusqu'à l'échéance de la réservation.

Cette étape de minutage S070 permet de surveiller l'occupation de la place de stationnement et de mettre en œuvre une étape d'alerte S080 comprenant l'envoi d'une notification au dispositif de communication mobile après un minutage prédéterminé. Cette notification est une proposition de prolongement si aucune réservation n'est en attente à l'échéance ou une alerte si une autre réservation est en attente à l'échéance. A la fin de la période réservée, le procédé met en œuvre une étape de détermination d'occupation S090 de place pour déterminer si la place a été libérée.

Si la place est libérée à l'échéance, le dispositif de blocage de place est déplacé S091 pour bloquer à nouveau la place de stationnement. Si non, il reste en place jusqu'à libération de la place et un second minutage, éventuellement consécutif au premier, est mis en œuvre S092 pour déterminer un surplus de tarif dépendant ou non de l'occupation supplémentaire.

A noter qu'une fois que la place est déterminée et réservée, le procédé peut optionnellement mettre en œuvre une étape de navigation pour guider le locataire à sa place de stationnement via une application existante telle que Google Maps par exemple ou d'autre.

Egalement, l'invention concerne un programme informatique agencé pour être installé sur un dispositif de communication mobile, tel qu'un smartphone ou une tablette, adapté pour mettre en œuvre le procédé décrit ci-dessus.

## Revendications

1. Procédé de gestion d'au moins une place de stationnement, comprenant
- une étape de transmission (S010) d'un message de réservation pour ladite au moins une place de stationnement pour une période de temps prédéterminée à partir d'un dispositif de communication mobile,
- une étape de mise en relation (S040) dudit dispositif de communication mobile avec un élément de blocage de place de stationnement,
- une étape de transmission (S050) d'une commande de libération du dispositif de communication mobile au dispositif de blocage de place de stationnement de sorte à le déplacer pour libérer la place de stationnement, et
- une étape de déplacement (S060) du dispositif de blocage de place de stationnement pour libérer la place de stationnement,
**caractérisé en ce qu'**il comprend en outre une étape de détection (S041) d'une distance entre le dispositif de communication mobile et ladite au moins une place de stationnement, antérieure à l'étape de mise en relation (S040) et ne permettant la mise en relation qu'en cas de détection d'une distance égale ou inférieure à une distance prédéterminée.

2. Procédé selon la revendication 1 **caractérisé en ce qu'**il comprend en outre une étape de détermination (S020) de la vacance de ladite au moins une place de stationnement pour la période de temps désirée postérieure à l'étape de transmission d'un message de réservation de sorte que l'étape de pairage n'est exécutée que si la vacance est avérée pour ladite période de temps.

3. Procédé selon la revendication 2, **caractérisé en ce qu'**il comprend en outre une étape de proposition alternative automatique (S030) consistant à proposer une place de stationnement alternative si ladite au moins une place de stationnement pour la période de temps désirée n'est pas vacante.

4. Procédé selon l'une quelconque des revendications 1 à 3 **caractérisé en ce que** l'étape de pairage (S040) comprend d'activer un élément de commande de libération sur ledit dispositif de communication mobile et **en ce qu'**une sélection dudit élément de commande de libération déclenche l'étape de transmission d'une commande de libération de la place de stationnement.

5. Procédé selon la revendication 2 **caractérisé en ce qu'**il comprend en outre une étape de recherche de place de stationnement ou d'un groupe de places de stationnement au plus proche de l'adresse donnée antérieure à l'étape de détermination (S020) de la vacance de la place stationnement.

6. Procédé selon l'une quelconque des revendications 1 à 5, **caractérisé en ce que** l'étape de déplacement (S060) du dispositif de blocage de place pour libérer la place de stationnement déclenche un minutage (S070) du temps jusqu'à l'échéance de la réservation.

7. Procédé selon la revendication 6, **caractérisé en ce qu'**il comprend une étape d'alerte (S080) comprenant l'envoi d'une notification au dispositif de communication mobile après un minutage prédéterminé.

8. Procédé selon la revendication 7, **caractérisé en ce que** la notification est une proposition de prolongement si aucune réservation n'est en attente à l'échéance.

9. Procédé selon la revendication 7, **caractérisé en ce que** la notification est une alerte si une autre réservation est en attente à l'échéance.

10. Procédé selon l'une quelconque des revendications précédentes, **caractérisé en ce qu'**à l'échéance de la réservation le procédé met en œuvre une étape de détermination d'occupation (S090) de place pour déterminer si la place a été libérée.

11. Procédé selon la revendication 10, **caractérisé en ce que** si la place est libérée à l'échéance, le dispositif de blocage de place est déplacé (S091) pour bloquer à nouveau la place de stationnement.

12. Procédé selon l'une quelconque des revendications précédentes, **caractérisé en ce que** le dispositif de blocage de place de stationnement est un arceau de sécurité à énergie solaire.

13. Procédé selon l'une quelconque des revendications précédentes, **caractérisé en ce qu'**il met en œuvre une étape de navigation pour guider le locataire à sa place de stationnement une fois la réservation effectuée.

14. Programme informatique agencé pour être installé sur un dispositif de communication mobile adapté pour mettre en œuvre le procédé selon l'une quelconque des revendications 1 à 10 et 13.

## Patentansprüche

1. Verfahren zur Verwaltung mindestens eines Parkplatzes, umfassend
- einen Schritt des Übertragens (S010) einer Reservierungsnachricht für den mindestens einen Parkplatz für einen vorbestimmten Zeitraum von einer mobilen Kommunikationsvorrichtung aus,
- einen Schritt des Inverbindungbringens (S040) der mobilen Kommunikationsvorrichtung mit einem Parkplatzblockierelement,
- einen Schritt des Übertragens (S050) eines Freigabebefehls der mobilen Kommunikationsvorrichtung an die Parkplatzblockiervorrichtung, so dass sie bewegt wird, um den Parkplatz freizugeben, und
- einen Schritt des Bewegens (S060) der Parkplatzblockiervorrichtung, um den Parkplatz freizugeben,
**dadurch gekennzeichnet, dass** es ferner einen Schritt des Detektierens (S041) einer Entfernung zwischen der mobilen Kommunikationsvorrichtung und dem mindestens einen Parkplatz umfasst, der vor dem Schritt des Inverbindungbringens (S040) stattfindet und das Inverbindungbringen nur im Fall des Detektierens einer Entfernung kleiner oder gleich einer vorbestimmten Entfernung ermöglicht.

2. Verfahren nach Anspruch 1, **dadurch gekennzeichnet, dass** es ferner einen Schritt des Bestimmens (S020) des Freizustands des mindestens einen Parkplatzes für den gewünschten Zeitraum umfasst, der nach dem Schritt des Übertragens einer Reservierungsnachricht stattfindet, so dass der Schritt des Pairings nur ausgeführt wird, wenn der Freizustand für den Zeitraum nachgewiesen ist.

3. Verfahren nach Anspruch 2, **dadurch gekennzeichnet, dass** es ferner eine Schritt des automatischen Vorschlagens einer Alternative (S030) umfasst, der darin besteht, einen alternativen Parkplatz vorzuschlagen, wenn der mindestens eine Parkplatz für den gewünschten Zeitraum nicht frei ist.

4. Verfahren nach einem der Ansprüche 1 bis 3, **dadurch gekennzeichnet, dass** der Schritt des Pairings (S040) das Aktivieren eines Freigabesteuerelements an der mobilen Kommunikationsvorrichtung umfasst und dass ein Auswählen des Freigabesteuerelements den Schritt des Übertragens eines Freigabebefehls für den Parkplatz auslöst.

5. Verfahren nach Anspruch 2, **dadurch gekennzeichnet, dass** es ferner einen Schritt des Suchens eines Parkplatzes oder einer Parkplatzgruppe, der bzw. die zu der gegebenen Adresse nächstgelegen ist, vor dem Schritt des Bestimmens (S020) des Freizustands des Parkplatzes umfasst.

6. Verfahren nach einem der Ansprüche 1 bis 5, **dadurch gekennzeichnet, dass** der Schritt des Bewegens (S060) der Platzblockiervorrichtung, um den Parkplatz freizugeben, eine Zeiterfassung (S070) der Zeit bis zum Ablauf der Reservierung auslöst.

7. Verfahren nach Anspruch 6, **dadurch gekennzeichnet, dass** es einen Schritt des Warnens (S080) umfasst, der das Senden einer Benachrichtigung an die mobile Kommunikationsvorrichtung nach einer vorbestimmten Zeiterfassung umfasst.

8. Verfahren nach Anspruch 7, **dadurch gekennzeichnet, dass** die Benachrichtigung ein Verlängerungsvorschlag ist, wenn bei Ablauf keine Reservierung wartet.

9. Verfahren nach Anspruch 7, **dadurch gekennzeichnet, dass** die Benachrichtigung eine Warnung ist, wenn bei Ablauf eine andere Reservierung wartet.

10. Verfahren nach einem der vorhergehenden Ansprüche, **dadurch gekennzeichnet, dass** das Verfahren bei Ablauf der Reservierung einen Schritt des Bestimmens des Belegtzustands (S090) des Platzes durchführt, um zu bestimmen, ob der Platz freigegeben worden ist.

11. Verfahren nach Anspruch 10, **dadurch gekennzeichnet, dass**, wenn der Platz bei Ablauf freigegeben worden ist, die Platzblockiervorrichtung bewegt wird (S091), um den Parkplatz wieder zu blockieren.

12. Verfahren nach einem der vorhergehenden Ansprüche, **dadurch gekennzeichnet, dass** die Parkplatzblockiervorrichtung ein Solarenergie-Sicherheitsbügel ist.

13. Verfahren nach einem der vorhergehenden Ansprüche, **dadurch gekennzeichnet, dass** es einen Navigationsschritt umfasst, um den Mieter nach erfolgter Reservierung zu seinem Parkplatz zu führen.

14. Computerprogramm, das dazu eingerichtet ist, auf einer mobilen Kommunikationsvorrichtung installiert zu werden, die geeignet ist, das Verfahren nach einem der Ansprüche 1 bis 10 und 13 durchzuführen.

## Claims

1. A method for managing at least one parking space, comprising
- a step of transmitting (S010) a reservation message for said at least one parking space for a predetermined period of time from a mobile communication device,
- a step of relating (S040) said mobile communication device to a parking space blocking element,
- a step of transmitting (S050) a release command from the mobile communication device to the parking space blocking device so as to move it to release the parking space, and
- a step of moving (S060) the parking space blocking device to release the parking space,
**characterized in that** it further comprises a step of detecting (S041) a distance between the mobile communication device and said at least one parking space prior to the relating step (S040) and allowing the relating only in the case of detection of a distance equal to or less than a predetermined distance.

2. The method according to claim 1, **characterized in that** it further comprises a step of determining (S020) the vacancy of said at least one parking space for the desired period of time subsequently to the step of transmitting a reservation message so that the pairing step is executed only if the vacancy is proven for said period of time.

3. The method according to claim 2, **characterized in that** it further comprises an automatic alternative proposal step (S030) which consists in proposing an alternative parking space if said at least one parking space for the desired period of time is not vacant.

4. The method according to any one of claims 1 to 3, **characterized in that** the pairing step (S040) comprises activating a release command element on said mobile communication device and **in that** a selection of said release command element triggers the step of transmitting a command for releasing the parking space.

5. The method according to claim 2, **characterized in that** it further comprises a step of searching for a parking space or a group of parking spaces closest to the address given prior to the step of determining (S020) the vacancy of the parking space.

6. The method according to any one of claims 1 to 5, **characterized in that** the step of moving (S060) the space blocking device to release the parking space triggers a timing (S070) of the time until the expiration of the reservation.

7. The method according to claim 6, **characterized in that** it comprises an alert step (S080) comprising sending a notification to the mobile communication device after a predetermined timing.

8. The method according to claim 7, **characterized in that** the notification is an extension proposal if no reservation is pending at expiration.

9. The method according to claim 7, **characterized in that** the notification is an alert if another reservation is pending at expiration.

10. The method according to any one of the preceding claims, **characterized in that**, at the expiration of the reservation, the method implements a space occupancy determination step (S090) to determine whether the space has been released.

11. The method according to claim 10, **characterized in that** if the space is released at expiration, the space blocking device is moved (S091) to block the parking space again.

12. The method according to any one of the preceding claims, **characterized in that** the parking space blocking device is a solar-powered roll bar.

13. The method according to any one of the preceding claims, **characterized in that** it implements a navigation step to guide the tenant to his parking space once the reservation has been made.

14. A computer program arranged to be installed on a mobile communication device adapted to implement the method according to any one of claims 1 to 10 and 13.
